# EUROPEAN PATENT APPLICATION

(11) **EP 3 940 312 A1**
(43) Date of publication of application: **19.01.2022**
(21) Application number: 20713941.1
(22) Date of filing: 21.02.2020
(51) Int. Cl.: F24S 30/452

(54) **SOLAR CONCENTRATION SYSTEM**

(30) Priority: 15.03.2019 ES 201930244 U
(71) Applicant: Galdón Cabrera, Carlos, 28034 Mirasierra (Madrid) (ES)
(72) Inventor: LORENTE MARTÍN, Enrique José, 28034 Madrid (ES); GALDÓN CABRERA, Carlos, 28034 Madrid (ES)
(74) Representative: Elzaburu S.L.P.
(86) International application number: PCT/ES2020/070130
(87) International publication number: WO 2020/188130

(57) **Abstract**

Solar concentration system comprising:
- an anchoring substructure (3);
- azimuthal actuation means (14);
- a tracking substructure (4) with rolling elements (9) that rotates about a vertical axis by the azimuthal actuation means (14) and that is placed on the anchoring substructure (3);
- elevation actuation means (11);
- a sliding driving substructure (5) comprising at least one open hoop (10) and a reinforcement substructure (6), arranged such that it is capable of sliding on the rolling elements (9) of the tracking substructure (4) driven by the elevation actuation means (11);
- a self-supporting substructure (7);
- a reflecting surface (1) that rests directly on the self-supporting substructure (7);
- a supporting substructure (8); and
- a solar receiver (2) supported by the supporting substructure (8);
wherein the self-supporting substructure (7) is mounted on the sliding drive substructure (5) and the supporting substructure (8) for the receiver (2) is joined to the sliding drive substructure (5) at one of the end areas thereof.

## Description

### Field of the invention

The present invention relates to a solar concentration system that belongs to the field of veryhigh-temperature thermosolar technology, operating above 580ºC, and is particularly applicable in dish Stirling solar concentration systems.

### Background of invention

A dish Stirling solar concentration system consists in a high-reflectivity solar concentrator that tracks the sun, usually parabolic or spherical, which reflects the solar radiation reaching its reflecting surface with a high energy density to a focal point, a solar receiver and a Stirling engine coupled to a generator. In these systems a working fluid, normally gaseous and located in the receiver, is heated to a temperature such that the energy absorbed by the fluid can be used to generate mechanical energy by the Stirling engine. An electrical generator coupled to the output shaft of the engine transforms the mechanical energy of the output shaft into electrical energy.

In dish Stirling technology an appropriate optical precision is crucial to ensure the functioning of the system and the integrity of the materials due to the high energy density reached, above 1000kW/m2. Unlike in the parabolic or tower cylindrical concentrating technology, the focal point is located in a very small surface. Consequently, a tracking error will result in the loss of all or a large proportion of the incident power, or the creation of a hotspot that can damage the system. Concentrating the solar power in a point where the receiver is not located, or simply redistributing said power in an undesired manner on the receiver surface has a direct effect on the efficiency of the dish Stirling system and therefore on the profitability of the technology. In some designs in which in addition part of the structure is near the focal point, a poor distribution of the power due to low tracking quality can even lead to complete collapse of the dish due to excessive heating of structural parts.

This optical precision can be reduced by a faulty design that leads to significant deformations when the system is operating due to the mechanical loads on the dish when rotating in elevation or azimuth, as is the case in the designs of the prior art.

Numerous dish solar concentration systems are known.

DE 8415444 U1 describes a reflector, specifically for antennae, solar energy concentrators and the like, with a concave curved reflecting surface comprising fixed and adjustable glass facets and a cupola made from rods resistant to pressure and shear loads, covered with the glass facets, where the reflector is mounted on a revolving stand. The pressure- and shear-resistant cupola is coupled to another posterior cupola by a common ring that provides stability against deformation to the pressure- and shear-resistant cupola, which is only rigid against pressure and shear loads.

WO 2014/037599 A1 relates to a structure for a parabolic point-based solar concentration system and to a concentrating system incorporating said structure, which is lighter and easier to assemble. It comprises a) a substructure for anchoring to the ground; b) a tracking substructure mounted on the anchoring substructure such that it can rotate about an azimuth axis; c) a driving substructure comprising two coaxial hoops formed by a plurality of assembled stamped segments, said hoops being joined by tie rods, the driving substructure being capable of zenith rotation in relation to the tracking substructure; d) a supporting substructure in the form of a cradle, intended to support a reflective surface; and e) a modular connection substructure which is made from stamped elements and secured inside the driving substructure and on which the supporting substructure is mounted. In this system, a large part of the tracking substructure is susceptible to potential deviations of the reflected power, as it is a full-ring configuration. This design feature implies a risk for the integrity of the system and does not allow placing the focal point at the best position for optimising the efficiency of the thermal engine.

These systems provide different proposals for reflecting the radiation falling on the reflecting surface to a focal point. However, in these systems the loads due to the forces exerted on the structures placed on the focal point and those of the main structure itself are transmitted directly to the optics of the installation, excessively deforming the optical structure in different ways depending on the elevation of the motor placed at the focal point, reducing the precision thereof. Since optical precision is the fundamental aspect of this technology, a reduction of precision and particularly of optical stability can lead to a system not being effective.

### Summary of the invention

The object of the present invention is therefore to provide a solar concentration system that solves the drawbacks discussed for the dish solar concentration systems of the prior art.

The invention provides a solar concentration system that comprises:
- an anchoring substructure,
- azimuthal actuation means,
- a tracking substructure with rolling elements, rotating about a vertical axis by means of the azimuthal actuation means and placed on the anchoring substructure,
- elevation actuation means,
- a sliding driving substructure comprising at least one open hoop and a reinforcement substructure, and arranged such that it is capable of sliding on the rolling elements of the tracking substructure driven by the elevation actuation means,
- a self-supporting substructure,
- a reflecting surface that rests directly on the self-supporting substructure,
- a supporting substructure, and
- a solar receiver supported by the supporting substructure
wherein the self-supporting substructure is mounted on the sliding drive substructure and the receiver supporting substructure is joined to the sliding drive substructure at one of the end areas thereof.

The configuration of the solar concentration system of the invention prevents the reflecting surface from suffering deformation caused by the mechanical loads due to the continuous rocking in elevation of the system and to the loads from the solar receiver and the elements connected thereto.

This is achieved by two design features.

Firstly, by the self-supporting configuration of the substructure supporting the reflecting surface. This self-supporting substructure rests on the sliding drive substructure, distributing its weight evenly thereon, such that there are no structural demands beyond those of its own weight: the system is actuated, but the movement does not affect the quality of the optics. The full additional structural loads (whether due to the loads on the focal point or to the dish actuation system) are borne by the sliding drive substructure. With regard to the mechanical loads on the optics, the system is equivalent to resting same directly on a structure that does not deform or does son in a negligible manner for the application in question. Therefore, the advantage provided by this mechanical configuration is that the effect of the mechanical loads of the dish on the optics when rotating in elevation or azimuth is completely minimised.

Secondly, the configuration of the supporting substructure for the solar receiver makes the loads resulting from the elements placed at the focal point (receiver, Stirling engine, etc.) be transmitted directly to the sliding drive substructure -rails- which is considerably more robust and independent, thereby ensuring that the reflecting surface is not affected by deformations other than due to its own weight.

This allows increasing the robustness of the system optics with a considerable increase in the yield of the solar concentrator. This is even true for the highest elevation operation points of the dish, and when higher loads must be used in the location of the solar receiver (such as heavy engines, reservoirs, etc.). Therefore, the present system solves the crucial drawback of optical stability.

The invention also presents a number of advantages with respect to the prior art:
- The design of the sliding drive substructure is such that none of its components can be exposed to the high thermal concentration delivered by the reflecting surface, both in normal operation and in case of power supply or operational failures. This configuration of the design provides the installation with additional safety, as its integrity is safeguarded. A deviation of thermal concentration to the structure would lead the latter to overheat above the material thresholds, causing irreversible deformations and/or damages in the system with a risk of collapse due to the high energy densities, above 1000Kw/m2.
- As there are no structural parts placed between the reflecting surface and the solar receiver the efficiency of the assembly is increased, since the energy delivered to the receiver for a given reflecting surface area is maximised in the absence of interferences leading to thermal losses.
- The reflecting surface rests directly through the self-supporting substructure on the main structure, unlike in other designs of the prior art wherein two independent structures are required. This means that the reflecting surface is better supported, at a lower cost, while reducing optical errors that may result by accumulated structural errors when adding several structures.
- The entire weight of the assembly formed by the self-supporting substructure and the reflecting surface is distributed among the sliding shafts. This means that to obtain the same optical precision as in other configurations of the prior art a much smaller amount of material (such as steel) is needed, thereby reducing costs and providing a competitive design over other technologies.
- The proposed configuration does not have upper limits for the dish size, as is the case for configurations with lattices and closed hoops. As there are no limitations, the design may be easily scaled to adapt to the optical requirements of engines with higher or lower thermal power.
- The proposed configuration of a system with a self-supporting substructure and a sliding substructure provides outstanding robustness, which allows operating the installation even under strong wind conditions, as the weight of the self-supporting surface is uniformly supported by the sliding drive substructure.
- In emergency situations, such as in very strong wind conditions, the system must have a safety position in which there is no risk to persons or to the installation. In the proposed design the safety position, in which the sliding drive substructure is oriented such that the self-supporting substructure rests horizontally, allows an optimum load distribution that reduces the effect of wind loads on the installation.
- The reflecting surface is at a small distance from the ground, swivelling on the anchoring structure in a controlled manner. This provides a highly robust design in which the movements are controlled and precise.
- The configuration of the solar concentrator as a system with a self-supporting substructure, and a sliding substructure, where the drive substructure slides on the tracking substructure on rolling elements, provides the assembly with a greater robustness than designs with a pillar configuration. This robustness allows greater quality and precision by reducing deformations due to the weight of the elements forming the assembly consisting in the self-supporting substructure and the reflecting surface. The absence of these deformations enables increasing the use of the reflected power and therefore considerably increasing the yield of the dish Stirling system.

Other advantageous embodiments of the invention are outlined in the dependant claims.

### Brief description of the figures

An illustrative embodiment is presented below, which is not limitative in any sense, of the purpose of this invention, with reference to the accompanying drawings wherein:
Figure 1 shows a side view of the solar concentration system of the invention.
Figure 2 shows a perspective view of the solar concentration system of the invention.
Figure 3 shows another perspective view in a different position of the solar concentration system of the invention.
Figure 4 shows a perspective view of the solar concentration system of the invention without some elements.

### Detailed description of the invention

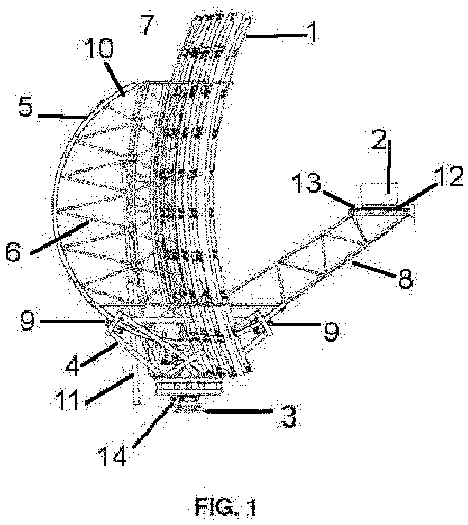

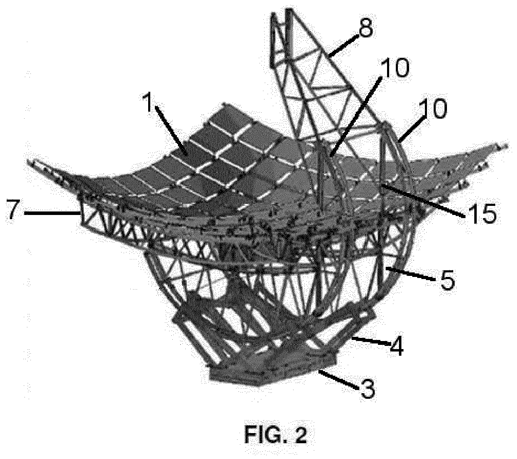

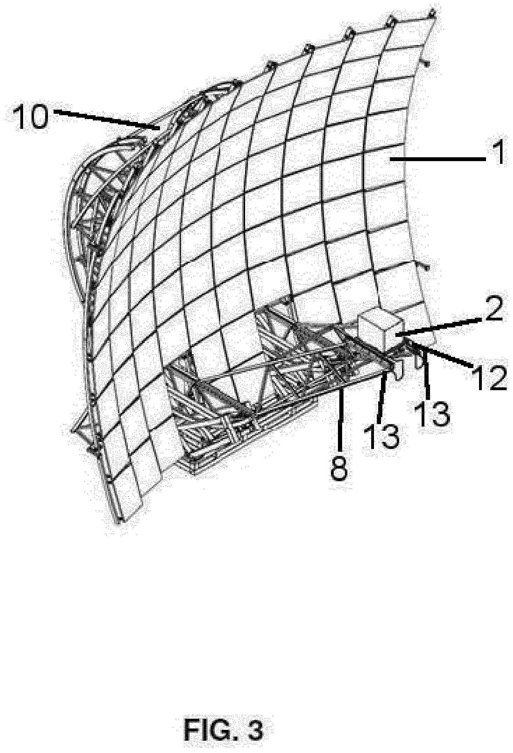

Figures 1, 2 and 3 are different views of the solar concentration system of the invention, which show a reflecting surface 1 (which can have the form of a parabola, as represented in figures 2 and 3) and a solar receiver 2. When the system is in operation, the solar radiation reaching the reflecting surface 1 is reflected thereby and reaches the solar receiver 2.

The solar concentration system also comprises a structure that in turn comprises several substructures, as shown in figures 1 to 3:
- an anchoring substructure 3 to secure the system to the ground;
- a tracking substructure 4 with rolling elements 9 that rotates about a vertical axis by azimuthal actuation means 14 and that is placed on the anchoring substructure 3;
- a sliding driving substructure 5 comprising at least one open hoop 10 and a reinforcement substructure 6, arranged such that it is capable of sliding on the rolling elements 9 of the tracking substructure 4 driven by actuation means 11;
- a self-supporting substructure 7 that supports the reflecting surface 1 directly; and
- a support substructure 8 for the solar receiver 2.

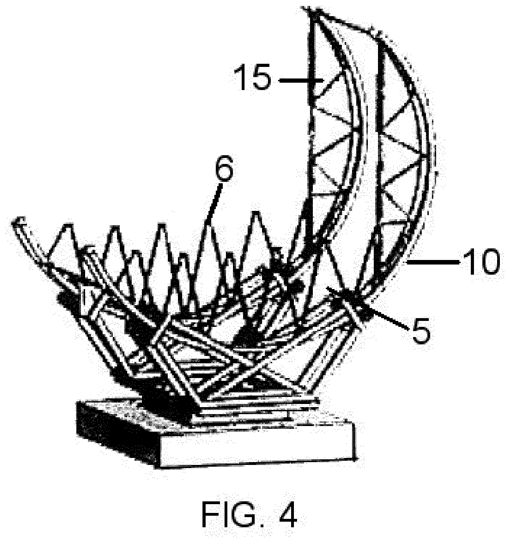

The sliding drive substructure 5 comprises at least one open hoop 10 and a reinforcement substructure 6 (see figure 4) meant to provide stiffness. This reinforcement substructure 6 can be a hinged structure (as in the figures), a solid element, or an element with orifices.

As can be seen in figures 1 to 3, the support substructure 8 for the solar receiver 2 is connected to the sliding drive substructure 5 in one of the end areas thereof, said end areas being those located near the ends of the sliding drive substructure where the ends of the open hoops 10 are also located.

In this way, any deformations will take place in one of the end areas of the sliding drive substructure 5, which will not affect the optics of the system nor the contact area of the sliding drive substructure 5 with the rolling elements 9 of the tracking substructure 4.

The solar concentration system is assembled by installing each of the various aforementioned substructures. As it is a modular structure formed by several substructures, assembly is quicker as a large part of the assembly work can be pre-made and does not have to be performed on-site, thereby optimising the structural, and therefore optical, quality of the system.

The solar receiver 2 can be connected to a system that operates at a temperature above 580ºC and with an energy density greater than 1000kW/m2, such as a Stirling engine, a microturbine, a hydrogen motor or a hydrogen production system by water dissociation, all of which are solar applications requiring a homogeneous energy density, which is achieved by a sufficiently stable optics in all the elevation and azimuth positions, as provided by the present invention.

According to an embodiment of the invention the solar receiver 2 is placed on a mobile element 12 (such as a carriage) that can move relatively to the supporting substructure 8.

The mobile element 12 can move on the supporting substructure 8. In this way, if the reflecting surface 1 is parabolic, the solar receiver 2 could be located in a displaced position with respect to the focal point since, in the operation of the system, it is not always desirable to place it exactly in the focal point depending on the power level delivered by the concentrator. Similarly, the relative position of the solar receiver can be adjusted when deformations occurs for any reason in the reflecting surface 1 that lead to a displacement in the focal point.

The displacement of the solar receiver on the supporting substructure 8 allows adjusting the relative position thereof with respect to the point of maximum concentration of the solar power reflected by the reflecting surface 1. This allows a simple and quick adjustment of the power reaching the solar receiver, which is very useful to both guarantee the safety of the installation and to optimise the operation of the solar concentrator, as it is a high energy density application with over 1000kW/m2.

According to another embodiment of the invention, the solar receiver 2 is located at the end of the supporting substructure 8 that is farthest from the sliding drive substructure 5. In the embodiment shown in figure 1, said end is the free end of the support substructure 8, that is, the end opposite the connection between the supporting substructure 8 and the sliding drive substructure 5.

According to another embodiment, the sliding drive substructure 5 comprises at one of its end areas a connection substructure 15 on which the supporting substructure 8 is mounted.

The reflecting surface 1 is preferably a surface with a parabolic or spherical shape. According to another embodiment the solar concentration system additionally comprises an intermediate coupling structure (not represented) located between the sliding drive substructure 5 and the self-supporting substructure 7. This intermediate coupling structure can consist of shock absorbers, silentblocks, metal structure layers or foam.

According to other embodiments, the reinforcement substructure 6 can be a hinged structure, a solid element or an element with orifices.

Although some embodiments of the invention have been described and represented, it is clear that modifications may be introduced to them within the scope of the same, and that this should not be considered limited to these embodiments, but only to the content of the following claims.

## Claims

1. Solar concentration system comprising:
- an anchoring substructure (3);
- azimuthal actuation means (14);
- a tracking substructure (4) with rolling elements (9) that rotates about a vertical axis by the azimuthal actuation means (14) and that is placed on the anchoring substructure (3);
- elevation actuation means (11);
- a sliding driving substructure (5) comprising at least one open hoop (10) and a reinforcement substructure (6), arranged such that it is capable of sliding on the rolling elements (9) of the tracking substructure (4) driven by the elevation actuation means (11);
- a self-supporting substructure (7);
- a reflecting surface (1) that rests directly on the self-supporting substructure (7);
- a supporting substructure (8); and
- a solar receiver (2) supported by the supporting substructure (8) **characterised in that** the self-supporting substructure (7) is mounted on the sliding drive substructure (5) and that the supporting substructure (8) for the receiver (2) is joined to the sliding drive substructure (5) at one of the end areas thereof.

2. Solar concentration system according to claim 1, wherein the solar receiver (2) is connected to a system that operates at a temperature above 580ºC and with an energy density above 1000kW/m2.

3. Solar concentration system according to claim 2, wherein the system that operates at a temperature above 580ºC and with an energy density above 1000kW/m2 is a Stirling engine.

4. Solar concentration system according to claim 2, wherein the system that operates at a temperature above 580ºC and with an energy density above 1000kW/m2 is a microturbine, a hydrogen motor or a hydrogen production system by water dissociation.

5. Solar concentration system according to any of the preceding claims, wherein the solar receiver (2) is placed on a mobile element (12) that moves relative to the supporting substructure (8).

6. Solar concentration system according to claim 5, wherein the mobile element (12) is a carriage that can move on rails (13) placed on the supporting substructure (8).

7. Solar concentration system according to any of the preceding claims, wherein the solar receiver (2) is located at the end of the supporting substructure (8) that is farthest from the sliding drive substructure (5).

8. Solar concentration system according to any of the preceding claims, wherein the reflecting surface (1) is a surface with a parabolic shape.

9. Solar concentration system according to any of the preceding claims, additionally comprising an intermediate coupling structure located between the sliding drive substructure (5) and the self-supporting structure (7).

10. Solar concentration system according to claim 8, wherein the intermediate coupling structure is formed by shock absorbers, silentblocks, metal structure layers or foam.

11. Solar concentration system according to any of the preceding claims, additionally comprising an intermediate coupling structure (15) located between the sliding drive substructure (5) and the supporting substructure (8).

12. Solar concentration system according to any of the preceding claims, wherein the reinforcement substructure (6) is a hinged structure, a solid element or an element with orifices.
